# EUROPEAN PATENT SPECIFICATION

(11) **EP 3 130 647 B1**
(45) Date of publication and mention of the grant of the patent: **12.09.2018**
(21) Application number: 15775939.0
(22) Date of filing: 01.04.2015
(51) Int. Cl.: C09J 7/00, B32B 27/00, B32B 27/30, C09J 4/02, C09J 11/06, C09J 181/00, B32B 25/04, B32B 7/12, B32B 27/40, C08G 18/67, C08G 18/38, C08G 75/045, C09J 175/16

(54) **ADHESIVE SHEET, MANUFACTURING METHOD THEREFOR, AND LAMINATE**
KLEBEFOLIE, HERSTELLUNGSVERFAHREN DAFÜR UND LAMINAT
FEUILLE ADHÉSIVE, SON PROCÉDÉ DE PRODUCTION AINSI QUE CORPS STRATIFIÉ

(30) Priority: 07.04.2014 JP 2014078902
(43) Date of publication of application: 15.02.2017
(73) Proprietor: Bridgestone Corporation, Tokyo 104-8340 (JP)
(72) Inventor: KITANO, Hajime, Tokyo 104-8340 (JP)
(74) Representative: Oxley, Robin John George
(86) International application number: PCT/JP2015/060380
(87) International publication number: WO 2015/156191

(56) References cited:
- WO-A1-2014/109217
- WO-A1-2014/203779
- JP-A- S60 108 430
- JP-A- 2004 277 660
- JP-A- 2009 256 465
- JP-A- 2013 544 903
- US-A1- 2005 119 366
- US-A1- 2005 245 711

## Description

### Technical Field

The present invention relates to an adhesive sheet, a method of producing the same, and a layered body, and more specifically relates to, for example, an adhesive sheet suitable for adhesion to rubber and a method of producing the same, and a layered body in which a rubber layer is adhered using the adhesive sheet.

### Background Art

Although materials exhibiting excellent adhesive power to vulcanized rubber have thus far been desired, there has not been a material which provides sufficient adhesive power. An example of a method employed for adhering vulcanized rubber is disclosed in Japanese Patent Application Laid-open (JP-A) No. H10-139901, in which vulcanized rubber is surface-treated, and another member is adhered to the surface-treated face using an adhesive. Reference is also made to US 2005/119366 which discloses thiolene-curing adhesive formulations and US 2005/245711 which discloses self-photoinitiating water-dispersible acrylate ionomers.

### SUMMARY

The method described in JP-A No. H10-139901 includes adhering vulcanized rubber to another member using a polyurethane-based adhesive. However, there is still a room for improvement of adhesive power thereof.

In consideration of the above, the present disclosure relates to, for example, an adhesive sheet capable of exhibiting high adhesive power to rubber and a method of producing the same, and a layered body in which the adhesive sheet is used. Solution to Problem

According to an aspect of the present invention, a method of producing an adhesive sheet having an adhesive composition layer including a composition that includes a polythiol compound, a (meth)acrylic compound having a plurality of at least one of an acryloyl group or a methacryloyl group, a radical generator, and a Michael addition catalyst, in which the ratio (Ac/SH) of the total molar number (Ac) of at least one of an acryloyl group or a methacryloyl group contained in the (meth)acrylic compound to the total molar number (SH) of thiol groups contained in the polythiol compound is from 0.25 to 0.80, is provided.

### Effect of Invention

According to embodiments of the present invention, it is possible to provide an adhesive sheet capable of exhibiting high adhesive power to rubber and a method of producing the same, and a layered body in which the adhesive sheet is used.

### DETAILED DESCRIPTION

### Composition

The adhesive sheet produced by a method according to one embodiment of the present invention is an adhesive sheet having an adhesive composition layer formed from a compound which includes: a polythiol compound(, which may be hereinafter referred to as a polythiol compound (A)); a (meth)acrylic compound having a plurality of at least one of an acryloyl group or a methacryloyl group(, which may be hereinafter referred to as a (meth)acrylic compound (B)); a radical generator(, which may be hereinafter referred to as a radical generator (C)); and a Michael addition catalyst(,which may be hereinafter referred to as a Michael addition catalyst (D)), in which a ratio (Ac/SH) of a total molar number (Ac) of the at least one of an acryloyl group or a methacryloyl group contained in the (meth)acrylic compound (B) to a total molar number (SH) of thiol groups contained in the polythiol compound (A) is from 0.25 to 0.80.

Hereinafter, a substituent which is the "at least one of an acryloyl group or a methacryloyl group" may be sometimes referred to as a "(meth)acryloyl group".

The adhesive sheet includes at least the adhesive composition layer. The term "adhesive composition layer" as used herein refers to a layer formed by polymerization of the component (A) and the component (B) in a composition containing the components (A) to (D), as described below. When the above-described adhesive sheet is used, an "adhesion layer" strongly adhering to an adherend (particularly, rubber) can be formed by subjecting the adhesive composition layer to the aftermentioned adhesion treatment to promote a radical reaction of the component (A).

Further, an adhesive sheet that includes at least the adhesive composition layer may be used, and the adhesive sheet may further include the aftermentioned support and the like. In other words, the adhesive sheet may be formed of the adhesive composition layer alone, or may be configured to include a support and the adhesive composition layer retained on a surface of the support (and one or more other layers, if necessary).

In one embodiment, the adhesive sheet is able to exhibit high adhesive power to rubber in particular. Further, the adhesive sheet is also able to exhibit high adhesive power to vulcanized rubber as well as unvulcanized rubber. The reason therefor is not perfectly clear, but is conceivably as follows.

The adhesive composition layer in the adhesive sheet is a layer obtained by curing of a composition including the components (A) to (D) through a Michael addition reaction of a part of the amount of the polythiol compound (A) and the (meth)acrylic compound (B).

When the adhesive sheet and rubber are to be adhered to each other, another part of the amount of the polythiol compound (A) contained in the adhesive composition layer is converted into a thiyl radical due to the radical generator (C) activated by an energy such as heat or light. The thiyl radical reacts with carbon-carbon double bonds present in the rubber, whereby an adhesion layer is formed.

Therefore, when the adhesive sheet is used, high film strength is achieved by the Michael addition reaction of the component (A) and the component (B). Moreover, high interfacial adhesive power is also obtained by chemical bonding of the adhesive composition layer to rubber through the thiol-ene reactions described above. It is conceivable that the high film strength and the high interfacial adhesive power enable formation of an adhesion layer having high adhesive power to rubber. In particular, the adhesive sheet exhibits high adhesive power to vulcanized rubber as well as to unvulcanized rubber, conceivably because carbon-carbon double bonds are present not only in unvulcanized rubber but also in vulcanized rubber.

It is also conceivable that chemical bonding between a sulfur atom in a thiol group in the polythiol compound (A) and a carbon atom in a carbon-carbon bond occurs as a result of a hydrogen abstraction reaction from the main chain formed by carbon-carbon bonds present in the rubber. Therefore, the adhesive sheet is able to exhibit adhesive power to rubber even when carbon-carbon double bonds are not necessarily present in the rubber.

When the adhesive sheet is used, it is conceivable that the adhesive sheet is able to exhibit sufficiently high adhesive power to rubbers in general, even in the case where surface roughening treatment, such as grinding, is not carried out on the adhesion faces of the rubbers, because the adhesive composition layer of the adhesive sheet and the rubber chemically bind to each other as described above. Omitting a surface roughening treatment on the adhesion face of the rubber, as described above, provides for simplification and improved efficiency of an adhering process.

Since the composition including the components (A) to (D) is also able to exhibit high adhesive power to vulcanized rubber, when vulcanized rubber materials are adhered to each other by using the adhesive sheet, adhesion can be achieved at a remarkably lower temperature and over a remarkably shorter length of time (for example, from 100 to 150°C for from 3 to 30 minutes) than when unvulcanized rubber materials are brought into contact with each other and adhesion is performed while vulcanizing them.

### <Composition>

First, the composition used for forming the adhesive composition layer will be described.

In the present specification, the polythiol compound (A), the (meth)acrylic compound (B), the radical generator (C), the Michael addition catalyst (D) and the after-mentioned surface adjustor (E) are also referred to as "component (A)", "component (B)", "component (C)", "component (D)", and "component (E)", respectively, in some cases.

### <Polythiol Compound (A)>

In the present invention, the term "polythiol compound" refers to a compound having two or more thiol groups in one molecule thereof. As the component (A), one polythiol compound may be used singly, or two or more polythiol compounds may be used in combination.

In the polythiol compound (A), the number of thiol groups in one molecule thereof is not particularly limited as long as the above-defined relationship with the total molar number of (meth)acryloyl groups in the component (B) is satisfied. From the viewpoint of improving the adhesive power, the polythiol compound (A) preferably has three or more thiol groups in one molecule thereof. The upper limit of the number of thiol groups in one molecule of the polythiol compound (A) is not particularly limited, and may be selected, as appropriate, as long as the effects according to the present invention are not impaired. The number of thiol groups in one molecule may usually be within the range of from 2 to 7, preferably within the range of from 3 to 6, and more preferably within the range of from 3 to 4, although the number may vary depending on whether the polythiol compound (A) is a low-molecular-weight compound or a high-molecular-weight compound. However, these ranges should not be construed as limiting the scope of the present invention.

The scope of the polythiol compound (A) encompasses primary thiols, secondary thiols, and tertiary thiols. Primary thiols are preferable from the viewpoint of improving the adhesive power.

The molecular weight of the polythiol compound (A) is preferably 3000 or less, more preferably 2000 or less, still more preferably 1000 or less, further more preferably 900 or less, and particularly preferably 800 or less, from the viewpoint of improving the adhesive power. Further, the lower limit of the molecular weight of the polythiol compound (A) is not particularly limited. The lower limit of the molecular weight of the polythiol compound (A) is preferably 200 or more, and still more preferably 300 or more. When the polythiol compound (A) is a polymer, the "molecular weight" refers to the styrene-equivalent number average molecular weight.

The polythiol compound (A) includes an aliphatic polythiol that may include a heteroatom and optionally an aromatic polythiol that may include a heteroatom. An aliphatic polythiol that may include a heteroatom is preferable from the viewpoint of improving the adhesive power.

The "aliphatic polythiol that may include a heteroatom" refers to an aliphatic compound that has two or more thiol groups in one molecule thereof and that may include a heteroatom. The "aromatic polythiol that may include a heteroatom" refers to an aromatic compound that has two or more thiol groups in one molecule thereof and that may include a heteroatom.

From the viewpoint of improving the adhesive power, the included heteroatom, or heteroatoms, is preferably at least one kind selected from the group consisting of oxygen, nitrogen, sulfur, phosphorus, halogen, and silicon; is more preferably at least one kind selected from the group consisting of oxygen, nitrogen, sulfur, phosphorus, and halogen; and is particularly preferably at least one kind selected from the group consisting of oxygen, nitrogen, and sulfur.

### (Aliphatic Polythiol That May Include Heteroatom)

Examples of the aliphatic polythiol that may include a heteroatom include: a polythiol in which a portion other than the thiol groups is an aliphatic hydrocarbon, such as an alkanedithiol having from 2 to 20 carbon atoms; a polythiol obtainable by replacing halogen atoms of a halohydrin adduct of an alcohol with thiol groups; a polythiol that is a hydrogen sulfide reaction product of a polyepoxide compound; a thioglycolic acid ester obtainable by an ester-forming reaction between a polyhydric alcohol having from 2 to 6 hydroxyl groups in a molecule thereof and thioglycolic acid; a mercapto fatty acid ester obtainable by an ester-forming reaction between a polyhydric alcohol having from 2 to 6 hydroxyl groups in a molecule thereof and a mercapto fatty acid; a thiol isocyanurate compound obtainable by a reaction between an isocyanurate compound and a thiol; a thiol that includes a polysulfide group; a silicone modified with thiol groups; and silsesquioxane modified with thiol groups.

Examples of the polyhydric alcohol having from 2 to 6 hydroxyl groups in a molecule thereof include an alkanediol having from 2 to 20 carbon atoms, a poly(oxyalkylene)glycol, glycerol, diglycerol, trimethylolpropane, ditrimethylolpropane, pentaerythritol, and dipentaerythritol.

Among the above-exemplified aliphatic polythiols that may include a heteroatom, from the viewpoint of improving the adhesive power, a polythiol in which a portion other than the thiol groups is an aliphatic hydrocarbon, a polythiol obtainable by replacing halogen atoms of a halohydrin adduct of an alcohol with thiol groups, a polythiol that is a hydrogen sulfide reaction product of a polyepoxide compound, a thioglycolic acid ester, a mercapto fatty acid ester, and a thiol isocyanurate compound are preferable; a mercapto fatty acid ester and a thiol isocyanurate compound are more preferable; and a mercapto fatty acid ester is particularly preferable. From similar viewpoints, a thiol that does not include a polysulfide group or a siloxane bond is also preferable.

### (Polythiol in which a Portion Other than Thiol Groups is Aliphatic Hydrocarbon)

The polythiol in which a portion other than thiol groups is an aliphatic hydrocarbon is, for example, an alkanedithiol having from 2 to 20 carbon atoms.

Examples of the alkanedithiol having from 2 to 20 carbon atoms include 1,2-ethanedithiol, 1,1-propanedithiol, 1,2-propanedithiol, 1,3-propanedithiol, , 2,2-propanedithiol, 1,4-butanedithiol, 2,3-butanedithiol, 1,5-pentanedithiol, 1,6-hexanedithiol, 1,8-octanedithiol, 1,10-decanedithiol, 1-1-cyclohexanedithiol, and 1,2-cyclohexanedithiol.

### (Thioglycolic Acid Ester)

Examples of the thioglycolic acid ester include 1,4-butanediol bisthioglycolate, 1,6-hexanediol bisthioglycolate, trimethylolpropane tristhioglycolate, and pentaerythritol tetrakisthioglycolate.

### (Mercapto Fatty Acid Ester)

The mercapto fatty acid ester is preferably a β-mercapto fatty acid ester having a primary thiol group, and is more preferably a β-mercaptopropionic acid ester of a polyhydric alcohol having from 2 to 6 hydroxyl groups in a molecule thereof, from the viewpoint of improving the adhesive power. Further, the mercapto fatty acid ester having a primary thiol group preferably has from 4 to 6 thiol groups in one molecule thereof, more preferably has 4 or 5 thiol groups in one molecule thereof, and further preferably has 4 thiol groups in one molecule thereof, from the viewpoint of improving the adhesive power.

Preferable examples of the β-mercaptopropionic acid ester having a primary thiol group include tetraethyleneglycol bis(3-mercaptopropionate) (EGMP-4), trimethylolpropane tris(3-mercaptopropionate) (TMMP), pentaerythritol tetrakis(3-mercaptopropionate) (PEMP), and dipentaerythritol hexakis(3-mercaptopropionate) (DPMP). Among these, PEMP and DPMP are preferable, and PEMP is more preferable.

The β-mercaptopropionic acid ester having a secondary thiol group is, for example, an ester between a polyhydric alcohol having from 2 to 6 hydroxyl groups in a molecule thereof and β-mercaptobutanoic acid, and specific examples thereof include 1,4-bis(3-mercaptobutylyloxy)butane and pentaerythritol tetrakis(3-mercaptobutyrate).

### (Thiol Isocyanurate Compound)

The thiol isocyanurate compound, which is obtainable via a reaction between an isocyanurate compound and a thiol, is preferably a thiol isocyanurate compound having a primary thiol group, from the viewpoint of improving the adhesive power. Further, the thiol isocyanurate compound having a primary thiol group preferably has 2 to 4 thiol groups in one molecule thereof, and more preferably has 3 thiol groups in one molecule thereof, from the viewpoint of improving the adhesive power.

The thiol isocynaurate compound having a primary thiol group is preferably tris-[(3 -mercaptopropionyloxy)-ethyl] -isocyanurate (TEMPIC).

### (Silicone Modified with Thiol Group)

Examples of the silicone modified with thiol groups include mercapto-modified silicone oils such as KF-2001, KF-2004, and X-22-167B (tradenames, manufactured by Shin-etsu Chemical Co., Ltd.), SMS042 and SMS022 (tradenames, manufactured by Gelest Inc.), and PS849 and PS850 (tradenames, manufactured by UCT Inc.).

### (Aromatic Polythiol That May Include Heteroatom)

Examples of aromatic polythiols that may be used include the aromatic polythiols listed below. As described above, the aromatic polythiol may include a heteroatom. Specifically, examples of the aromatic polythiols include 1,2-dimercaptobenzene, 1,3-dimercaptobenzene, 1,4-dimercaptobenzene, 1,2-bis(mercaptomethyl)benzene, 1,3-bis(mercaptomethyl)benzene, 1,4-bis(mercaptomethyl)benzene, 1,2-bis(mercaptoethyl)benzene, 1,3-bis(mercaptoethyl)benzene, 1,4-bis(mercaptoethyl)benzene, 1,2,3-trimercaptobenzene, 1,2,4-trimercaptobenzene, 1,3,5-trimercaptobenzene, 1,2,3-tris(mercaptomethyl)benzene, 1,2,4-tris(mercaptomethyl)benzene, 1,3,5-tris(mercaptomethyl)benzene, 1,2,3-tris(mercaptoethyl)benzene, 1,2,4-tris(mercaptoethyl)benzene, 1,3,5-tris(mercaptoethyl)benzene, 2,5-toluenedithiol, 3,4-toluenedithiol, 1,3-di(p-methoxyphenyl)propane-2,2-dithiol, 1,3-diphenylpropane-2,2-dithiol, phenylmethane-1,1-dithiol, and 2,4-di(p-mercaptophenyl)pentane.

### <(Meth)Acrylic Compound (B)>

In the invention, the (meth)acrylic compound having a plurality of at least one of an acryloyl group or a methacryloyl group is a compound having two or more (meth)acryloyl groups in one molecule thereof. Namely, it is sufficient as long as the total of the number of acryloyl groups and the number of methacryloyl groups contained in one molecule of the (meth)acrylic compound (B) is two or more. The (meth)acrylic compound (B) may have two or more of just one of acryloyl groups or methacryloyl groups in one molecule thereof, or may have both an acryloyl group and a methacryloyl group in one molecule thereof. One kind of (meth)acrylic compound alone or two or more kinds of (meth)acrylic compounds may be employed in combination as the component (B).

There are no particular limitation to the number of (meth)acryloyl groups in one molecule of the component (B) as long as the relationship to the total number of moles of the thiol groups in the component (A) is satisfied. From the perspective of increasing the adhesive power and the durability of adhesion, although the number is different depending on whether it is a low molecular weight compound or a high molecular weight compound (for example, oligomers and polymers), the number of (meth)acryloyl groups in one molecule of the component (B) is, for example, from 2 to 70, is preferably from 2 to 10, and is more preferably from 3 to 7 from the perspective of adhesive power. However, the scope of the invention is not limited to such a range.

When the component (B) is a high molecular weight compound, the number average molecular weight of the component (B) is, for example, 50000 or less, is preferably 40000 or less, and is more preferably 35000 or less, from the perspective of improving the adhesive power. There is no particular limitation to the lower limit for the number average molecular weight of the component (B); however, the number average molecular weight of the component (B) is, for example, 2000 or greater.

Specific examples of the (meth)acrylic compound (B) having plural (meth)acryloyl groups include di(meth)acrylates, and polyfunctional (meth)acrylates having three or more (meth)acrylate groups. The (meth)acrylic compound (B) having plural (meth)acryloyl groups may also have a nitrogen atom, and specific suitable examples of the (meth)acrylic compound (B) having plural (meth)acryloyl groups include (meth)acrylates with a urethane skeleton, and (meth)acrylates having an isocyanurate ring. Moreover, epoxy poly(meth)acrylate, polyester poly(meth)acrylate, and the like are also suitably employed as the (meth)acrylic compound (B) having plural (meth)acryloyl groups.

Note that in the present specification (meth)acrylate means at least one of an acrylate or a corresponding methacrylate.

From among these (meth)acrylic compounds (B) having plural (meth)acryloyl groups, from the perspective of obtaining an adhesion layer having a high film strength, a compound having three or more (meth)acryloyl groups is preferable, a (meth)acrylic compound having a nitrogen atom is more preferable, and, specifically, a (meth)acrylate having at least one out of a urethane skeleton or an isocyanurate ring is more preferably employed therefor.

Moreover, from the perspective of obtaining an adhesion layer having a high film strength, from out of compounds having three or more (meth)acryloyl groups, a compound having three or more acryloyl groups is preferable.

Examples of the (meth)acrylate having a urethane skeleton include poly(meth)acrylate urethanes obtained by reacting an organic isocyanate compound with a hydroxy group-containing (meth)acrylate having one or more (meth)acryloyloxy group(s) and one hydroxy group in a molecule thereof. Examples of the poly(meth)acrylate urethanes include compounds obtained by reacting an organic isocyanate compound with a hydroxy group-containing (meth)acrylate and, if necessary, at least one diol selected from the group consisting of alkanediols, polyether diols, polybutadiene diols, polyester diols, polycarbonate diols, and amide diols.

A known method may be employed as the method to obtain a poly(meth)acrylate urethane by reacting a hydroxy group-containing (meth)acrylate with an organic isocyanate compound.

Examples of the organic isocyanate compound include: an aromatic diisocyanate such as toluene diisocyanate, diphenylmethane diisocyanate, diphenyl dimethyl methane diisocyanate, dibenzyl diisocyanate, naphthylene diisocyanate, phenylene diisocyanate, xylene diisocyanate, or tetramethylxylylene diisocyanate; aliphatlic diisocyanates such as tetramethylene diisocyanate, hexamethylene diisocyanate, Lysine diisocyanate, 2-methylpentane-1,5-diisocyanate, 3-methylpentane-1,5-diisocyanate, or 2,2,4-trimethylhexamethylene diisocyanate; and alicyclic diisocyanates such as isophorone diisocyanate, cyclohexane diisocyanate, hydrogenated xylylene diisocyanate, hydrogenated diphenylmethane diisocyanate, or hydrogenated trimethylxylylene diisocyanate. Examples thereof further include modified products such as adducts, carbodiimide-modified products, allophanate-modified products, biuret-modified products, uretdione-modified products, uretonimine-modified products, and isocyanurate-modified products of the above.

Examples of the hydroxy group-containing (meth)acrylate include 2-hydroxyethyl (meth)acrylate, 2-hydroxypropyl (meth)acrylate, 4-hydroxybutyl (meth)acrylate, glycerin di(meth)acrylate, trimethylolpropane di(meth)acrylate, pentaerythritol tri(meth)acrylate, and dipentaerythritol penta(meth)acrylate.

Examples of the (meth)acrylic compound having an isocyanurate ring include products obtained from reacting a compound having an isocyanurate ring and plural hydroxy groups with acrylic acid or methacrylic acid.

Examples of the compound having an isocyanurate ring and plural hydroxy groups include tris(2-hydroxyethyl)isocyanurate and tris(hydroxymethyl)isocyanurate.

From among (meth)acrylates having at least one of a urethane skeleton or an isocyanurate ring, a (meth)acrylate having a ring structure is used.

Although the number of rings contained in one molecule of the(meth)acrylate having a ring structure may be different depending on whether the (meth)acrylate having a ring structure is a low molecular weight compound or a high molecular weight compound, it may, for example, be from 1 to 200, and among these from 1 to 50 is preferable, from 1 to 20 is more preferable, and from 2 to 10 is still more preferable. Note that in cases in which a polycyclic ring structure is included, the number of individual rings is counted to give the "number of rings". Specifically, in cases in which, for example, there is only a single anthracene structure as the ring structure in one molecule thereof, the "number of rings" is three.

Examples of the ring structure include an isocyanurate ring, an aromatic ring, and an aliphatic ring.

Namely, examples of the "(meth)acrylate having a ring structure" include, as well as (meth)acrylates having an isocyanurate ring, poly(meth)acrylate urethanes resulting from reacting an organic isocyanate compound having a ring structure with a hydroxy group-containing (meth)acrylate. Examples of the organic isocyanate compound having a ring structure include the aromatic isocyanates, the alicyclic isocyanates, and isocyanurate-modified products of the organic isocyanate compound.

Specific examples of the (meth)acrylate having a ring structure include compounds represented by the following structural formulae (1) to (5).

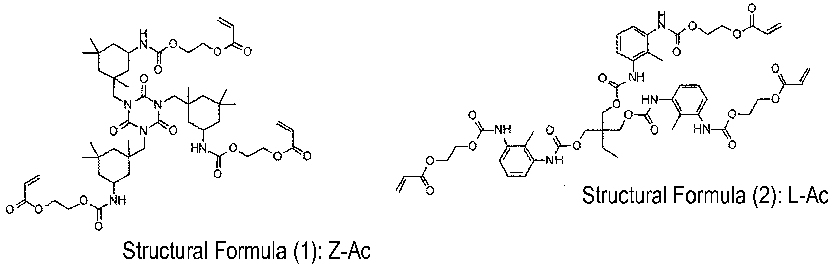

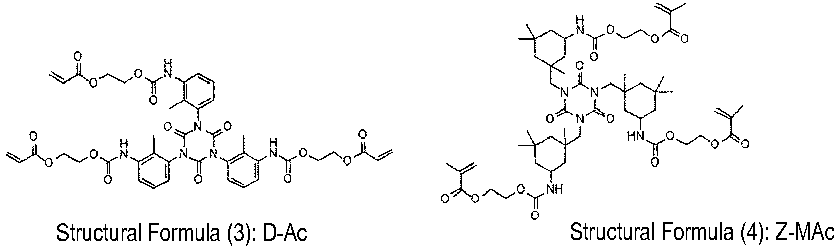

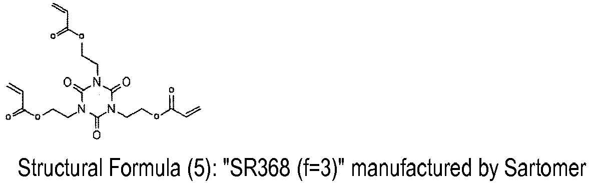

Moreover, specific examples of the di(meth)acrylate include di(meth)acrylates of straight chain alkanediols such as 1,6-hexanediol di(meth)acrylate, di(meth)acrylates of alkanediols having a branched structure such as neopentylglycol di(meth)acrylate, di(meth)acrylates of alkanediols having a ring structure such as dicyclopentadiol di(meth)acrylate, and polyether diol di(meth)acrylates such as polyethylene glycol di(meth)acrylate.

Moreover, specific examples of the di(meth)acrylate include alkylene oxide adducts of di(meth)acrylates of straight chain alkanediols, alkylene oxide adducts of di(meth)acrylates of alkanediols having a branched structure, and alkylene oxide adducts of polyether diol di(meth)acrylates.

Note that the number of carbons in the alkanediols of the di(meth)acrylates of straight chain alkanediols, the di(meth)acrylates of alkanediols having a branched chain structure, and the di(meth)acrylates of alkanediols having a ring structure is preferably, for example, from 2 to 50.

The number of repeating units of the polyether in the polyether diol di(meth)acrylates is, for example, from 2 to 15.

Specific examples of the polyfunctional (meth)acrylates having three or more (meth)acrylate groups include (meth)acrylated polyhydric alcohols such as trimethylolpropane, pentaerythritol, and glycerin (for example, esters of polyhydric alcohols and methacrylic acid), or alkylene oxide-modified products thereof (for example, alkylene oxide adducts of such esters). The number of carbons in the polyhydric alcohols is, for example, from 6 to 100.

In the present specification, (meth)acrylic acid means at least one of acrylic acid or methacrylic acid.

Further specific examples of the polyfunctional (meth)acrylate having three or more (meth)acrylate groups include trimethylolpropane tri(meth)acrylate, dipentaerythritol penta(meth)acrylate, dipentaerythritol hexa(meth)acrylate, pentaerythritol tri(meth)acrylate, and pentaerythritol tetra(meth)acrylate.

Moreover, an epoxy poly(meth)acrylate and a polyester poly(meth)acrylate may be employed as the (meth)acrylic compound (B) having plural (meth)acryloyl groups, as described above.

Specific examples of the epoxy poly(meth)acrylate include bisphenol epoxy di(meth)acrylate resulting from reacting a bisphenol epoxy resin obtained by a condensation reaction of bisphenol A and epichlorohydrin, with methacrylic acid.

Specific examples of the polyester poly(meth)acrylate include compounds obtained by reacting a polybasic acid such as phthalic acid, with a polyhydric alcohol such as ethylene glycol, and with (meth)acrylic acid.

### <Radical Generator (C)>

The term "radical generator" refers to a compound that generates a radical when energy from, for example, light or heat is imparted to the compound, and specifically refers to a compound which generates a thiyl radical by reacting with the polythiol compound (A).

The radical generator(s) (C) to be used is a thermal radical generator. Thermal radical generators including a peroxide are preferable, from the viewpoints of improving the adhesive power and enabling the adhesion of a light-nontransmissive rubber. Examples of the thermal radical generators including a peroxide include thermal radical generators including an organic peroxide and thermal radical generators including an inorganic peroxide. Thermal radical generators including an organic peroxide are preferable.

One radical generator may be used singly as the radical generator (C), or two or more radical generators may be used in combination as the radical generator (C).

The thermal radical generator(s) including an organic peroxide to be used is, for example, at least one selected from the group consisting of t-butyl peroxy-2-ethylhexanoate, dilauroyl peroxide, 1,1,3,3-tetramethylbutyl peroxy-2-ethylhexanoate, 1,1-di(t-hexylperoxy)cyclohexanone, di-t-butyl peroxide, t-butyl cumyl peroxide, 1,1-di(t-hexylperoxy)-3,3,5-trimethylcyclohexane, t-amyl peroxy-2-ethylhexanoate, di(2-t-butylperoxyisopropyl)benzene, di(t-butyl) peroxide, peroxybenzoyl 1,1'-di(2-t-butylperoxyisopropyl)benzene, peroxybenzoyl, 1,1-di(t-butylperoxy)cyclohexane, di(3,5,5-trimethylhexanoyl)peroxide, t-butyl peroxyneodecanoate, t-hexyl peroxyneodecanoate, and dicumyl peroxide. Among these, the thermal radical generator(s) including an organic peroxide is preferably at least one selected from the group consisting of t-butyl peroxy-2-ethylhexanoate, dilauroyl peroxide, 1,1,3,3-tetramethylbutyl peroxy-2-ethylhexanoate, 1,1-di(t-hexylperoxy)cyclohexanone, di-t-butyl peroxide and t-butyl cumyl peroxide. One thermal radical generator including an organic peroxide may be used, or two or more thermal radical generators each including an organic peroxide may be used in combination.

The thermal radical generator including an inorganic peroxide is, for example, a redox radical generator composed of a combination of an oxidant and a reductant, such as a combination of a hydrogen peroxide and an iron (II) salt or a combination of a persulfuric acid salt and sodium hydrogen sulfite. One thermal radical generator including an inorganic peroxide may be used singly, or two or more thermal radical generators each including an inorganic peroxide may be used in combination.

Known photoradical generators may widely be used, without particular limitations.

The photoradical generator is, for example, an intramolecular fission-type photoradical generator, and examples thereof include: benzoin alkyl ether-based photoradical generators such as benzoin ethyl ether, benzoin isobutyl ether, and benzoin isopropyl ether; acetophenone-based photoradical generators such as 2,2-diethoxyacetophenone and 4'-phenoxy-2,2-dichloroacetophenone; propiophenone-based photoradical generators such as 2-hydroxy-2-methylpropiophenone, 4'-isopropyl-2-hydroxy-2-methylpropiophenone, and 4'-dodecyl-2-hydroxy-2-methylpropiophenone; benzil dimethyl ketal; 1-hydroxycyclohexyl phenyl ketone; anthraquinone-based photoradical generators such as 2-ethylanthraquinone and 2-chloroanthraquinone; and acylphosphine oxide-based photoradical generators.

Further examples include hydrogen abstraction-type photoradical generators such as benzophenone/amine-based photoradical generators, Michiller's ketone/benzophenone-based photoradical generators, and thioxanthone/amine-based photoradical generators. Non-extractable photoradical generators are also usable for avoiding migration of unreacted portion of photoradical generator. Examples thereof include the polymerized form of an acetophenone-based radical generator and a substance obtainable by adding a double bond of an acryl group to benzophenone.

One or more of the photoradical generator, such as those described above, may be used in combination with the thermal radical generator.

### Michael Addition Catalyst (D)

The Michael addition catalyst referred to here means a compound capable of promoting a Michael addition reaction between the polythiol compound (A) and the (meth)acrylic compound (B).

Amine-based catalysts are used as Michael addition catalysts, but other catalysts such as base catalysts, and organometallic catalysts may optionally be used in addition to the amine-based catalysts.

The amine-based catalysts are catalysts having an amine skeleton. Specific examples thereof include proline, triazabicyclodecene (TBD), diazabicycloundecene (DBU), hexahydro methyl pyrimido pyridine (MTBD), diazabicyclononane (DBN), tetramethylguanidine (TMG), and triethylenediamine (TEDA).

Examples of the base catalysts include sodium methoxide, sodium ethoxide, potassium tertiarybutoxide, potassium hydroxide, sodium hydroxide, sodium metal, lithium diisopropylamide (LDA), and butyllithium.

Examples of the organometallic catalysts include ruthenium catalysts such as (cyclooctadiene)(cyclooctatriene)ruthenium and ruthenium hydride, iron catalysts such as iron(III)chloride and iron acetylacetonate, nickel catalysts such as nickel acetylacetonate, nickel acetate, and nickel salicylaldehyde, copper catalysts, palladium catalysts, scandium catalysts, lanthanum catalysts, ytterbium catalysts, and tin catalysts.

These catalysts may be employed singly, or two or more kinds thereof may be employed in combination.

As the Michael addition catalyst (D), an amine-based catalyst is used, and among these an amine-based catalyst having two or more amino groups in one molecule thereof is preferable, an amine-based catalyst having a ring structure is particularly preferable, and from among these a triethylene diamine is most preferable.

### <<Optional Components>>

The composition forming the adhesive composition layer of the adhesive sheet may be prepared such that the composition further includes optional components. Examples of the optional components include solvents, binders, fillers, pigment dispersants, electric conductivity imparting agents, ultraviolet absorbers, antioxidants, anti-drying agents, penetrants, pH adjusters, metal chelating agents, mildewproof agents, antibacterial agents, surfactants, plasticizers, waxes, and leveling agents.

### (Surface Conditioner (E))

The composition forming the adhesive composition layer of the adhesive sheet includes a surface conditioner (hereinafter also referred to as "surface conditioner (E)"), as necessary. A silicone acrylate-based surface conditioner is used as the surface conditioner (E). Examples of other surface conditioners that may be used in combination with a silicone acrylate-based surface conditioner include acrylic surface conditioners, vinyl-based surface conditioners, silicone-based surface conditioners and fluorine-based surface conditioners. Among these, silicone acrylate-based surface conditioners are used from the viewpoints of compatibility and the ability to decrease surface tension.

### (Solvent)

The composition forming the adhesive composition layer of the adhesive sheet may be prepared such that the composition includes a solvent, as necessary. The solvent may be any solvent that does not react with other components, without particular limitation. Examples thereof include aromatic solvents and aliphatic solvents.

Specific examples of the aromatic solvents include toluene and xylene. Examples of the aliphatic solvents include hexane, methyl ethyl ketone (MEK), and butyl acetate.

### (Other Components)

The composition forming the adhesive composition layer of the adhesive sheet may include a compound that includes a carbon-carbon double bond, as an optional component.

However, a high content of the compound that includes a carbon-carbon double bond results in a reaction between the polythiol compound (A) and the compound that includes a carbon-carbon double bond. This reaction makes it difficult for the polythiol compound (A) and a carbon-carbon double bond in the rubber to undergo a thiol-ene reaction in some cases, and may decrease the adhesive power of the adhesive sheet with respect to the rubber. Or, a high content of the compound that includes a carbon-carbon double bond may make difficult the occurrence of a chemical bonding reaction between a sulfur atom of a thiol group of the polythiol compound (A) and a carbon atom in a carbon-carbon bond due to a hydrogen abstraction reaction from the main chain of the rubber formed by carbon-carbon bonds, and may decrease the adhesive power of the adhesive sheet with respect to the rubber. Therefore, the ratio of the total molar number of carbon-carbon double bonds contained in the contained carbon-carbon double bond-containing compound relative to the total molar number of thiol groups contained in the contained polythiol compound (A) (carbon-carbon double bonds/thiol groups) is preferably lower than 0.4, preferably lower than 0.1, more preferably 0.08 or lower, still more preferably 0.05 or lower, and particularly preferably 0.01 or lower.

Here, the total molar number of carbon-carbon double bonds contained in the contained carbon-carbon double bond-containing compound can be obtained by multiplying the molar number of the contained compound by the number of carbon-carbon double bonds contained in one molecule of the compound.

The molar ratio (carbon-carbon double bonds/thiol groups) can be obtained by dividing the obtained total molar number of contained carbon-carbon double bonds by the total molar number of thiol groups contained in the contained polythiol compound (A).

### <Contents of Individual Components>

The ratio (Ac/SH) of the total molar number (Ac) of (meth)acryloyl groups contained in the (meth)acrylic compound (B) to the total molar number (SH) of thiol groups contained in the polythiol compound (A) is from 0.25 to 0.80. When the ratio (Ac/SH) is lower than 0.25, an adhesive composition layer which is hardened with sufficient tightness may not be obtained, and the adhesive power may decrease. When the ratio (Ac/SH) is higher than 0.80, the amount of thiol groups in the component (A) is small relative to the amount of (meth)acryloyl groups in the component (B), as a result of which the thiol-ene reaction between thiol groups and carbon-carbon double bonds on the rubber surface may not sufficiently proceed, the adhesive composition layer may not tightly adhere to the rubber, and the interfacial adhesive power may decrease. Therefore, the ratio (Ac/SH) is preferably 0.30 or higher, and is preferably 0.70 or lower. In one embodiment, the lower limit of the ratio (Ac/SH) is 0.25, 0.30, 0.35, 0.40, 0.45, 0.50, 0.60 or 0.70, and the upper limit of the ratio (Ac/SH) is a value which is larger than the lower limit and is 0.70, 0.60, 0.50, 0.45, 0.40, 0.35 or 0.30.

The total molar number (SH) of thiol groups contained in the polythiol compound (A) can be obtained by multiplying the molar number of the polythiol compound (A) by the number of thiol groups contained in one molecule of the polythiol compound (A). In other words, the total molar number (SH) of thiol groups contained in the polythiol compound (A) refers to the total amount of thiol groups contained in the total amount of polythiol compound (A) contained in the composition according to the present invention, and does not refer to the number of thiol groups contained in one molecule of the polythiol compound.

Further, the total molar number (Ac) of (meth)acryloyl groups contained in the compound (B) can be obtained by dividing the weight content of the (meth)acrylic compound (B) by the theoretical molecular weight thereof, and multiplying the obtained value by the number of (meth)acryloyl groups contained in one molecule of the (meth)acrylic compound (B). In other words, the total molar number (Ac) of (meth)acryloyl groups contained in the (meth)acrylic compound (B) refers to the total amount of (meth)acryloyl groups contained in the total amount of the (meth)acrylic compound (B) contained in the composition, and does not refer to the number of (meth)acryloyl groups contained in one molecule of the (meth)acrylic compound.

When the total molar number (SH) of thiol groups or the total molar number (Ac) of (meth)acryloyl groups is obtained after the adhesive composition layer or the adhesion layer has been formed, the molecular structures and the contents of the component (A) and the component (B) contained in the composition (the composition before it forms an adhesion layer) may be determined using known measurement methods, such as an NMR measurement or an IR measurement, and then the values of SH and Ac may be obtained using the method described above.

The ratio of the total molar number of the radical generator (C) contained in the composition to the total molar number of thiol groups contained in the polythiol compound (A) (radical generator (C)/thiol groups) is preferably 0.025 or higher. When the ratio is 0.025 or higher, the composition is able to exhibit sufficient adhesive power. From the same viewpoint, the ratio (radical generator (C)/thiol groups) is preferably 0.03 or higher, more preferably 0.035 or higher, and particularly preferably 0.04 or higher. From the viewpoint of the improvement in adhesiveness, the ratio (radical generator (C)/thiol groups) is preferably 0.80 or lower, more preferably 0.70 or lower, and particularly preferably 0.60 or lower.

The content of the Michael addition catalyst (D) in the composition which forms the adhesive composition layer in the adhesive sheet is preferably 0.005 parts by mass to 5 parts by mass, more preferably from 0.01 parts by mass to 4 parts by mass, and particularly preferably from 0.05 parts by mass to 3.5 parts by mass, relative to 100 parts of the polythiol compound (A), from the viewpoint of increasing the film strength and the adhesive power by sufficiently promoting the Michael addition reaction between the polyol compound (A) and the (meth)acrylic compound (B).

As described above, the composition which forms the adhesive composition layer in the adhesive sheet may include optional components (for example, the compound that includes a carbon-carbon double bond, or the solvent) in addition to the components (A) to (E). However, from the viewpoint of strongly adhering to rubber, particularly to vulcanized rubber, the total content of the components (A) to (D), excluding solvents, in the composition which forms the adhesive composition layer in the adhesive sheet is 80% by mass or higher, more preferably 90% by mass or higher, still more preferably 95% by mass or higher, and further preferably 98% by mass or higher, with respect to the total amount, excluding solvents, of the composition.

From the same viewpoint, the total content of the components (A) to (E), excluding solvents, in the composition is preferably 90% by mass or higher, more preferably 95% by mass or higher, still more preferably 99% by mass or higher, and further preferably 100% by mass, with respect to the total amount, excluding solvents, of the composition.

### <Adhesive Composition Layer>

The adhesive composition layer in the present specification is a layer obtained by polymerizing the component (A) and the component (B) in the composition including the components (A) to (D), as described above. Since the adhesive composition layer includes thiol groups and the radical generator (C), the adhesive composition layer exhibits high adhesive power particularly to rubber through thiol-ene reactions.

The thickness of the adhesive composition layer may be selected, as appropriate, in accordance with, for example, the object to which the adhesive composition layer is to be adhered, or the required adhesive power. The thickness of the adhesive composition layer is, for example, from 20 to 1000 µm, preferably from 30 to 300 µm, and more preferably from 30 to 200 µm.

The size of the adhesive composition layer may be selected, as appropriate, in accordance with, for example, the object to which the adhesive composition layer is to be adhered, or the required adhesive power.

### <Support>

The adhesive sheet may be formed, for example, by applying a composition including the above-described components (A) to (D) to a support to form a coating film, and polymerizing the component (A) and the component (B) in the coating film.

Examples of the support include sheet-shaped supports, for example, release sheets such as release paper or release films. Examples of materials that may be used in the sheet-shaped support include paper, resins, resin-coated paper, and metals.

For example, examples of resin release sheet materials include: polyester-based resins such as polyethylene terephthalate, polycyclohexylene terephthalate, and polyethylene naphthalate; polyamide-based resins such as NYLON 46, modified NYLON 6T, NYLON MXD6 and polyphthalamide; ketone-based resins such as polyphenylene sulfide and polythioether sulfone; and sulfone-based resins such as polysulfone and polyether sulfone. Other than those listed above, transparent resin substrates containing an organic resin such as polyether nitrile, polyarylate, polyether imide, polyamideimide, polycarbonate, polymethyl methacrylate, triacetyl cellulose, polystyrene, or polyvinyl chloride as a main component may also be used suitably as release sheets.

The support is not limited to the sheet-shaped supports described above, and any support may be used as long as the adhesive composition layer can be formed on a surface of the support. For example, the adhesive composition layer in the present specification may be formed on a supporting base as a support. In this matter, the thickness and the shape of the support may appropriately be designed in accordance with, for example, the shape of the adhesive composition layer to be formed.

### <Method of Producing Adhesive Sheet>

A method of producing the adhesive sheet includes an application process of applying a composition including the polythiol compound (A), the (meth)acrylic compound (B), the radical generator (C) and the Michael addition catalyst to a support to form a coating film, and a polymerization process of polymerizing the polythiol (A) and the (meth)acrylic compound (B) in the coating film to make the coating film an adhesive composition layer. In other words, the adhesive sheet is produced by shaping the composition including the components (A) to (D) so as to form the adhesive composition layer.

The method of producing the adhesive sheet includes at least the application process and the polymerization process, and may further include processes such as a preparation process of preparing the composition and a release process of releasing the adhesive composition layer from the support.

Explanations on the respective processes are provided below.

### -Preparation Process-

The method of producing the adhesive sheet may include the preparation process. In the preparation process, for example, the components (A) to (D) are mixed to prepare a composition.

### -Application Process-

In the application process, the composition is applied to a support to form a coating film (film of the composition). Examples of a method employed for applying the composition to a surface of the support include coating methods such as a spray coating method, a dip coating method and a spin coating method. However, the method employed for applying the composition to a surface of the support is not particularly limited. The thickness, shape, size and the like of the formed coating film may be designed, as appropriate, in accordance with the thickness, shape, size and the like of the desired adhesive composition layer.

### -Polymerization Process-

In the polymerization process, the component (A) and the component (B) in the coating film are polymerized, thereby converting the coating film into the adhesive composition layer. In other words, in the polymerization process, shape maintaining properties are imparted, by polymerization, to the coating film (film of the composition) formed on the support, thereby obtaining the adhesive composition layer. Specifically, in the polymerization process, it is conceivable that thiol groups of the component (A) and (meth)acryloyl groups of the component (B) in the coating film (composition) undergo a Michael addition reaction, whereby the adhesive composition layer is maintained in a sheet shape.

A method employed for polymerizing the component (A) and the component (B) in the coating film in the polymerization process is, for example, a method including leaving the coating film to stand at normal temperature after the formation of the coating film. Alternatively, the adhesive composition layer may be formed by heating the coating film to a degree at which radical reactions due to the radical generator do not start, after the formation of the coating film.

The duration of the polymerization process may be adjusted depending on the amount of the Michael addition catalyst. From the viewpoints of the handling properties at the time of forming the adhesive composition layer and impartment of shape maintaining properties to a degree at which the sheet shape of the adhesive composition layer is maintained at the time of adhering operation (at the time of forming the layered body), the duration of the polymerization process is preferably 1 minute or more, and more preferably 3 minutes or more.

With respect to the temperature of the coating film in the polymerization process, the coating film can usually be formed into a sheet at room temperature. However, heating may be performed to a degree that cleavage does not occur in the radical generator contained in the material. From the above viewpoints, the temperature of the coating film in the polymerization process is preferably from 0 to 60 °C, and more preferably from 15 to 40 °C.

### -Release Process-

The above-described method of producing the adhesive sheet may further include a release process of releasing the adhesive composition layer from the support. Specifically, when a sheet-shaped support is used as the support, for example, an adhesive sheet configured to include the support and the adhesive composition layer can be obtained through the application process and the polymerization process, and, an adhesive sheet formed of the adhesive composition layer released from the support can be obtained as a result of further performing the release process. When a supporting base or the like is used as the support, for example, an adhesive sheet formed of the adhesive composition layer released from the support can be obtained as a result of performing the application process and the polymerization process, and, further, the release process.

As described above, the adhesive composition layer of the adhesive sheet is able to exhibit high adhesive power to rubber. Therefore, the adhesive sheet is particularly suitable for adhesion to rubber, as described below, and can suitably be used in a layered body of a rubber layer and an adhesion layer. However, the applications of the adhesive sheet are not limited thereto, and the adhesive sheet can also be used, for example, in coating applications in which colored particles or the like are added to the composition in order to impart decoration or the like.

### [Layered Body]

The layered body according to an embodiment of the present invention includes, in the recited order, a rubber layer, an adhesion layer formed using the adhesive composition layer of the adhesive sheet described above, and another layer. In other words, the layered body is a layered body which includes plural layers adhered to one another, and in which at least one of the layers is a rubber layer, and in which the rubber layer is adhered to an adjacent layer via an adhesion layer formed using the adhesive composition layer of the adhesive sheet. With respect to the rubber layer and the another layer that are adhered via the adhesion layer, the entire adhesion face of the rubber layer and/or the entire adhesion face of the another layer may be adhered via the adhesion layer, or only a part of the adhesion face of the rubber layer and/or only a part of the adhesion face of the another layer may be adhered via the adhesion layer. The layered body may have a configuration in which three or more layers, including a rubber layer, are layered with the adhesion layer(s) according to the present disclosure disposed therebetween. This configuration is not limited to a configuration in which all of the layers are adhered to one another via the adhesion layer according to the present disclosure.

The another layer may be a rubber layer, or a layer other than a rubber layer, such as a glass layer, a metal layer or a resin layer.

The dimensions of each layer and the number of layers may be selected, as appropriate, in accordance with the purpose.

### <Rubber Layer>

The rubber layer may be formed from vulcanized rubber or unvulcanized rubber. The rubber constituting the rubber layer preferably has a carbon-carbon double bond. In this case, it is surmised that a carbon atom of a carbon-carbon double bond contained in the rubber layer contacting the adhesion layer forms a carbon-sulfur bond with a sulfur atom of a thiol group of the polythiol compound (A) contained in the adhesive sheet.

However, it is surmised that a layered body can be obtained even when the rubber constituting the rubber layer does not have a carbon-carbon double bond. In this case, it is surmised that a sulfur atom of a thiol group of the polythiol compound (A) and a carbon atom of a carbon-carbon bond chemically binds to each other via a hydrogen abstraction reaction in which the polythiol compound (A) pulls out hydrogen from the main chain formed by carbon-carbon bonds present in the rubber. However, from the viewpoint of improving the adhesive power, it is preferable that the rubber constituting the rubber layer has a carbon-carbon double bond.

The material of the rubber layer is not particularly limited, and examples thereof include: natural rubber (NR); conjugated diene synthetic rubbers, such as polyisoprene synthetic rubber (IR), polybutadiene rubber (BR), styrene-butadiene copolymer rubber (SBR), acrylonitrile butadiene rubber (NBR), chloroprene rubber (CR), and butyl rubber (IIR); ethylene-propylene copolymer rubber (EPM); ethylene-propylene-diene copolymer rubber (EPDM); and polysiloxane rubber. Materials for the rubber layer, such as those described above, may be used singly or in combination of two or more thereof. Among those described above, natural rubber (NR), and a combination of natural rubber and a styrene-butadiene copolymer rubber (SBR/NR), are preferable.

### <Layer other than Rubber Layer>

Examples of the layer other than the rubber layer include a metal layer, a resin layer, and a glass layer. Strong adhesion of the metal layer, the resin layer or the glass layer to the rubber layer can be achieved by using the above-described adhesive sheet.

### <Method of Producing Layered Body>

Next, a method of producing a layered body using the adhesive sheet is described. First, the adhesive composition layer of the adhesive sheet is disposed between at least one rubber layer and another layer (a rubber layer or a layer other than a rubber layer) that faces the rubber layer, thereby obtaining a stacked body.

Specifically, for example, one face of the adhesive composition layer is contacted with the adhesion face of the rubber layer, to attach the adhesive composition layer to the adhesion face of the rubber layer. Then, the adhesion face of another layer that is to face the rubber layer is contacted with the other face of the adhesive composition layer (the face not contacting the adhesion face of the rubber layer), to obtain a stacked body (i.e., a stacked body including the rubber layer, the adhesive composition layer and the another layer in this order).

When an adhesive sheet formed of the adhesive composition layer is used, the process of attaching the adhesive composition layer to the adhesion face of the rubber layer may include bringing one face of the adhesive sheet into contact with the adhesion face of the rubber layer. When an adhesive sheet including a support and the adhesive composition layer is used, a face of the adhesive composition layer of the adhesive sheet (a face not contacting with the support) may be contacted with the adhesion face of the rubber layer, the face of the adhesive composition layer being opposite to an adhesive composition layer face that contacts with the support.

When an adhesive sheet formed of the adhesive composition layer is used, the process of bringing the adhesion face of the another layer into contact with the adhesive composition layer may include bringing the adhesion face of the another layer into contact with a face of the adhesive composition layer (a face not contacting with the rubber layer), the face of the adhesive composition layer being opposite to an adhesive composition layer face contacting with the rubber layer. When an adhesive sheet including a support and the adhesive composition layer is used, the support of the adhesive sheet attached to the rubber layer may be released from the adhesive composition layer, and thereafter the adhesion face of the another layer may be contacted with an adhesive composition layer face that was in contact with the support (a face opposite to a face contacting with the rubber layer).

In the above explanation of the method employed for obtaining the stacked body, a method including bringing the another layer into contact with the adhesive composition layer after the adhesive composition layer is attached to the rubber layer is described. However, the method employed for obtaining the stacked body is not limited thereto. Specifically, when the another layer is a layer other than a rubber layer, the adhesive composition layer may be attached to the adhesion face of the another layer beforehand, and then the adhesion face of the rubber layer may be contacted with the adhesive composition layer to obtain the stacked body. Further, the adhesive composition layer may be attached to each of the rubber layer and the another layer, and then the adhesive composition layers may be contacted with each other, thereby obtaining a stacked body including the rubber layer, the first adhesive composition layer, the second adhesive composition layer and the another layer in this order.

After the stacked body is obtained, a layered body can suitably be produced by curing (performing the adhesion treatment) while applying, if necessary, a pressing pressure to the stacked body in the thickness direction of the stacked body.

In the case of applying a pressing pressure to the stacked body, the pressing pressure is preferably from 0.1 MPa to 5.0 MPa, more preferably from 0.4 MPa to 4.0 MPa, and particularly preferably from 0.5 MPa to 3.0 MPa, from the viewpoint of enhancing the adhesive power. The pressing time is preferably from 5 to 120 minutes, more preferably from 10 to 60 minutes, and particularly preferably from 15 to 45 minutes.

When the adhesive composition layer of the adhesive sheet includes a thermal radical generator as a radical generator, the adhering of the adhesive composition layer and the rubber layer or the like is preferably performed by heating. A temperature at which the thermal radical generator generates radicals efficiently may appropriately selected as the heating temperature, and the heating temperature is preferably a temperature that is within about ± 30°C from the temperature at which the half-life of the thermal radical generator is one minute.

When the adhesive composition layer of the adhesive sheet includes a photoradical generator as a radical generator, the adhering of the adhesive composition layer and the rubber layer or the like is preferably performed by photoirradiation. A ultraviolet (UV) lamp may preferably be used as the light source from the viewpoints of improving the adhesive power and reducing costs. From the same viewpoint, the photoirradiation time may be preferably from several seconds to several tens of seconds.

### EXAMPLES

The present invention is further described below in additional detail by reference to examples. However, the present invention is not limited to the following examples.

### [Raw Materials]

The following materials were used as raw materials.

### <Polythiol Compound (A) (Component (A))>

Pentaerythritol tetrakis(3-mercaptopropionate) (PEMP): a product manufactured by SC Organic Chemical Co., Ltd.

### <(meth)acrylic compound (B) (Component (B))>

Compound (Z-Ac) represented by Structural Formula (1) illustrated above Compound (L-MAc) represented by Structural Formula (2) illustrated above Compound (D-MAc) represented by Structural Formula (3) illustrated above Compound (Z-MAc) represented by Structural Formula (4) illustrated above

### <Radical Generator (C) (Component (C))>

t-butyl peroxy-2-ethylhexanoate: PERBUTYL O (tradename) manufactured by NOF CORPORATION

### <Michael Addition Catalyst (D) (Component (D))>

Triethylene diamine (TEDA)

### <Surface Controller (E) (Component (E))>

Silicone acrylate-based surface controller: SIU2400 (tradename) manufactured by Toyo Chemicals Co., Ltd.

### [Measurement of Total Molar Number (SH) of Thiol Groups]

The total molar number (SH) of thiol groups contained in the polythiol compound (A) was calculated by dividing the addition amount by the theoretical molecular weight, and multiplying the obtained value by the number of thiol groups contained in one molecule of the polythiol compound (A).

### [Measurement of Total Molar Number (Ac) of (Meth)acryloyl Groups]

The total molar number (Ac) of (meth)acryloyl groups in the (meth)acrylic compound (B) was obtained by dividing the addition amount mentioned above by the theoretical molecular weight, and multiplying the obtained value by the number of (meth)acryloyl groups contained in one molecule of the (meth)acrylic compound (B).

### [Production of Rubber]

Rubber (having a length of 100 mm, a width of 25 mm, and a thickness of 3 mm) was produced from the formulation indicated in the following Table 1.

**Table 1**

| | | Type of Rubber | |
|---|---|---|---|
| | | NR/SBR | NR |
| Formulation | NR | 15 | 100 |
| | SBR | 85 | - |
| | Carbon Black | 50 | 50 |
| | Stearic Acid | 2 | 2 |
| | Anti-aging Agent | 1 | 1 |
| | Zinc Oxide | 3 | 3 |
| | Vulcanization Accelerator 1 | 0.4 | 0.4 |
| | Vulcanization Accelerator 2 | 0.2 | 0.2 |
| | Sulfur | 1.4 | 1.4 |

| | | | |
|---|---|---|---|
| *Numbers in the table indicate parts by mass | | | |

The specifics of the individual components noted in Table 1 are as follows.

| Natural Rubber (NR): | RSS#3 |
|---|---|
| Styrene-butadiene Copolymer Rubber (SBR): | |
| | JSR1500 (tradename) manufactured by JSR CORPORATION |
| Anti-aging Agent: | N-phenyl-N'-(1,3-dimethylbutyl)-p-phenylenediamine (NOCRAC 6C (tradename) manufactured by OUCHI SHINKO CHEMICAL INDUSTRIAL CO., LTD.) |

| Vulcanization Accelerator 1: | |
|---|---|
| | 1,3-diphenylguanidine (NOCCELER D (D-P) (tradename) manufactured by OUCHI SHINKO CHEMICAL INDUSTRIAL CO., LTD.) |

| Vulcanization Accelerator 2: | |
|---|---|
| | di-2-benzothiazolyl disulfide (NOCCELER DM-P (DM) (tradename) manufactured by OUCHI SHINKO CHEMICAL INDUSTRIAL CO., LTD.) |

### [Examples and Comparative Examples]

In Examples 1 to 10 and Comparative Examples 1 to 6, in which the NR/SBR was used as rubber, the relationship between the adhesive power and the ratio (Ac/SH) of the total molar number of (meth)acryloyl groups contained in the addition amount of the (meth)acrylic compound (B) to the total molar number of thiol groups contained in the addition amount of the polythiol compound (A) was studied by changing the ratio (Ac/SH).

In Examples 11 to 25 and Comparative Examples 7 to 12, in which the NR was used as rubber, the relationship between the adhesive power and the ratio (Ac/SH) was studied in the same manner as in Examples 1 to 10 and Comparative Examples 1 to 6, except that the rubber (NR/SBR), which was employed in Examples 1 to 10 and Comparative Examples 1 to 6, was replaced by another rubber (NR).

The Examples and Comparative Examples are specifically described below.

### <Examples 1 to 10 and Comparative Examples 1 to 6> (in which NR/SBR was used as rubber)

A composition obtained by mixing the ingredients of (A) to (E) according to the formulation indicated in Tables 2 and 3 (the number for each ingredient represents the parts by mass of non-volatile portion) and an additional solvent as necessary was formed on a release sheet, thereby obtaining an adhesive sheet including a 100 µm-thick adhesive composition layer. MEK or butyl acetate was used as the solvent in view of compatibility and solubility retention. The NR/SBR was used as the rubber.

The adhesive composition layer of the obtained adhesive sheet was sandwiched between two rubber sheets (rubber substrates) to form a stacked body, and the stacked body was heated to form a layered body. The heating was performed by maintaining the stacked body at a temperature of 150°C while applying a pressing pressure of 2.5 MPa for 20 minutes. Then, the adhesive power of the adhesion layer formed using the adhesive composition layer as described above was measured. The results thereof are indicated in Tables 2 and 3.

### [Method Employed for Measurement of Adhesion Power of Adhesion Layer]

The opposite ends of the adjacent rubber substrates in the layered body were pulled away from each other (in the directions normal to the principal face of the rubber sheet, the directions forming an angle of 180°) under a tension rate of 50 mm/min., and the delamination strength (N/25mm) was measured and used as an indicator of the adhesive power.

With respect to the adhesive power, a delamination strength of 100N/25mm or greater indicates that a sufficient adhesive power at a level at which the rubber substrate breaks before delamination occurs is obtained. The delamination strength is preferably 300N/25mm or greater. In contrast, when the adhesive power (the delamination strength) is less than 100N/25mm, the reaction at the interface between the rubber substrate and the adhesive does not proceed sufficiently, and delamination occurs at the interface or the adhesive itself undergoes cohesive failure due to insufficient cohesive force of the adhesive. Occurrence of such a phenomenon indicates that the adhesive power is insufficient.

### <Examples 11 to 25 and Comparative Examples 7 to 12> (in which NR was used as rubber)

Ingredients were mixed according to the formulation indicated in the following Tables 4 and 5 (the number for each ingredient indicating the parts by mass of non-volatile portion), to obtain a composition, and an adhesive sheet was prepared from the obtained composition.

The obtained adhesive was cured in the same manner as described above, and the adhesive power of the adhesion layer in the layered body was measured in the same manner as described above. The NR was used as the rubber. The results thereof (the evaluation results) are indicated in Tables 4 and 5.

**Table 2**

| | Formulation | | | | | | | | Ac/SH | Component (C)/Thiol Groups | Evaluation |
|---|---|---|---|---|---|---|---|---|---|---|---|
| | Component (A) | Component (B) | | | | Component (C) | Component (D) | Component (E) | | | Adhesive Power |
| | PEMP | Z-Ac | L-MAc | D-MAc | Z-MAc | PERBUTYL O | TEDA | SIU2400 | | | |
| | (% by mass) | (% by mass) | (% by mass) | (% by mass) | (% by mass) | (% by mass) | (% by mass) | (% by mass) | (Molar Ratio) | (Molar Ratio) | (N/25mm) |
| Comparative Example 1 | 46.76 | - | 27.42 | - | - | 24.83 | 0.05 | 0.94 | 0.20 | 0.30 | 5.61 |
| Comparative Example 2 | 45.42 | - | - | - | 28.04 | 24.13 | 1.50 | 0.91 | 0.20 | 0.30 | 6.50 |
| Example 1 | 41.13 | - | 36.17 | - | - | 21.84 | 0.04 | 0.82 | 0.30 | 0.30 | 511.32 |
| Example 2 | 39.61 | - | - | 38.52 | - | 21.04 | 0.04 | 0.79 | 0.30 | 0.30 | 620.34 |
| Example 3 | 37.23 | - | - | 42.22 | - | 19.77 | 0.04 | 0.74 | 0.35 | 0.30 | 569.98 |
| Example 4 | 36.70 | - | 43.04 | - | - | 19.49 | 0.04 | 0.73 | 0.40 | 0.30 | 539.49 |
| Example 5 | 35.48 | - | - | - | 43.80 | 18.84 | 1.17 | 0.71 | 0.40 | 0.30 | 530.72 |
| Example 6 | 36.46 | 43.33 | - | - | - | 19.36 | 0.12 | 0.73 | 0.45 | 0.30 | 653.08 |
| Example 7 | 32.89 | 48.87 | - | - | - | 17.47 | 0.11 | 0.66 | 0.50 | 0.30 | 570.67 |
| Example 8 | 33.13 | - | 48.58 | - | - | 17.60 | 0.03 | 0.66 | 0.50 | 0.30 | 710.13 |
| Example 9 | 29.96 | 53.43 | - | - | - | 15.91 | 0.10 | 0.60 | 0.60 | 0.30 | 427.95 |
| Example 10 | 27.51 | 57.24 | - | - | - | 14.61 | 0.09 | 0.55 | 0.70 | 0.30 | 639.94 |

| | | | | | | | | | | | |
|---|---|---|---|---|---|---|---|---|---|---|---|
| * In the table, "-" indicates that the component is not included. | | | | | | | | | | | |

**Table 3**

| | Formulation | | | | | | | | Ac/SH | Component (C)/Thiol Groups | Evaluation |
|---|---|---|---|---|---|---|---|---|---|---|---|
| | Component (A) | Component (B) | | | | Component (C) | Component (D) | Component (E) | | | Adhesive Power |
| | PEMP | Z-Ac | L-MAc | D-MAc | Z-MAc | PERBUTYL O | TEDA | SIU2400 | | | |
| | (% by mass) | (% by mass) | (% by mass) | (% by mass) | (% by mass) | (% by mass) | (% by mass) | (% by mass) | (Molar Ratio) | (Molar Ratio) | (N/25mm) |
| Comparative Example 3 | 23.65 | 63.24 | - | - | - | 12.56 | 0.08 | 0.47 | 0.90 | 0.3 | 93.30 |
| Comparative Example 4 | 23.86 | - | 62.97 | - | - | 12.67 | 0.02 | 0.48 | 0.90 | 0.3 | 97.43 |
| Comparative Example 5 | 22.10 | 65.66 | - | - | - | 11.73 | 0.07 | 0.44 | 1.00 | 0.3 | 81.13 |
| Comparative Example 6 | 21.41 | - | - | - | 66.08 | 11.37 | 0.71 | 0.43 | 1.00 | 0.3 | 6.51 |

| | | | | | | | | | | | |
|---|---|---|---|---|---|---|---|---|---|---|---|
| * In the table, "-" indicates that the component is not included. | | | | | | | | | | | |

**Table 4**

| | Formulation | | | | | | | | Ac/SH | Component (C)/Thiol Groups | Evaluation |
|---|---|---|---|---|---|---|---|---|---|---|---|
| | Component (A) | Component (B) | | | | Component (C) | Component (D) | Component (E) | | | Adhesive Power |
| | PEMP | Z-Ac | L-MAc | D-MAc | Z-MAc | PERBUTYL O | TEDA | SIU2400 | | | |
| | (% by mass) | (% by mass) | (% by mass) | (% by mass) | (% by mass) | (% by mass) | (% by mass) | (% by mass) | (Molar Ratio) | (Molar Ratio) | (N/25mm) |
| Comparative Example 7 | 46.76 | - | 27.42 | - | - | 24.83 | 0.05 | 0.94 | 0.20 | 0.30 | 1.60 |
| Comparative Example 8 | 45.42 | - | - | - | 28.04 | 24.13 | 1.50 | 0.91 | 0.20 | 0.30 | 1.87 |
| Example 11 | 42.33 | - | - | 34.30 | - | 22.48 | 0.04 | 0.85 | 0.25 | 0.30 | 142.20 |
| Example 12 | 40.88 | 36.45 | - | - | - | 21.71 | 0.14 | 0.82 | 0.30 | 0.30 | 130.29 |
| Example 13 | 41.13 | - | 36.17 | - | - | 21.84 | 0.04 | 0.82 | 0.30 | 0.30 | 298.64 |
| Example 14 | 39.61 | - | - | 38.52 | - | 21.04 | 0.04 | 0.79 | 0.30 | 0.30 | 330.78 |
| Example 15 | 37.23 | - | - | 42.22 | - | 19.77 | 0.04 | 0.74 | 0.35 | 0.30 | 109.43 |
| Example 16 | 36.46 | 43.33 | - | - | - | 19.36 | 0.12 | 0.73 | 0.40 | 0.30 | 524.90 |
| Example 17 | 36.70 | - | 43.04 | - | - | 19.49 | 0.04 | 0.73 | 0.40 | 0.30 | 425.65 |
| Example 18 | 35.48 | - | - | - | 43.80 | 18.84 | 1.17 | 0.71 | 0.40 | 0.30 | 144.83 |
| Example 19 | 36.46 | 43.33 | - | - | - | 19.36 | 0.12 | 0.73 | 0.45 | 0.30 | 243.60 |
| Example 20 | 32.89 | 48.87 | - | - | - | 17.47 | 0.11 | 0.66 | 0.50 | 0.30 | 257.65 |
| Example 21 | 33.13 | - | 48.57 | - | - | 17.60 | 0.03 | 0.66 | 0.50 | 0.30 | 502.17 |

| | | | | | | | | | | | |
|---|---|---|---|---|---|---|---|---|---|---|---|
| * In the table, "-" indicates that the component is not included. | | | | | | | | | | | |

**Table 5**

| | Formulation | | | | | | | | Ac/SH | Component (C)/Thiol Groups | Evaluation |
|---|---|---|---|---|---|---|---|---|---|---|---|
| | Component (A) | Component (B) | | | | Component (C) | Component (D) | Component (E) | | | Adhesive Power |
| | PEMP | Z-MAc | L-MAc | D-MAc | Z-Ac | PERBUTYL O | TEDA | SIU2400 | | | |
| | (% by mass) | (% by mass) | (% by mass) | (% by mass) | (% by mass) | (% by mass) | (% by mass) | (% by mass) | (Molar Ratio) | (Molar Ratio) | (N/25mm) |
| Example 22 | 29.96 | 53.43 | - | - | - | 15.91 | 0.10 | 0.60 | 0.60 | 0.30 | 291.08 |
| Example 23 | 30.20 | - | 53.13 | - | - | 16.04 | 0.03 | 0.60 | 0.60 | 0.30 | 181.47 |
| Example 24 | 27.51 | 57.24 | - | - | - | 14.61 | 0.09 | 0.55 | 0.70 | 0.30 | 294.05 |
| Example 25 | 27.74 | - | 56.95 | - | - | 14.73 | 0.03 | 0.55 | 0.70 | 0.30 | 117.21 |
| Comparative Example 9 | 23.86 | - | 62.96 | - | - | 12.67 | 0.02 | 0.48 | 0.90 | 0.30 | 5.11 |
| Comparative Example 10 | 22.38 | - | - | 65.27 | - | 11.88 | 0.02 | 0.45 | 0.90 | 0.30 | 4.11 |
| Comparative Example 11 | 22.10 | 65.66 | - | - | - | 11.73 | 0.07 | 0.44 | 1.00 | 0.30 | 6.51 |
| Comparative Example 12 | 21.41 | - | - | - | 66.08 | 11.37 | 0.71 | 0.43 | 1.00 | 0.30 | 1.00 |

| | | | | | | | | | | | |
|---|---|---|---|---|---|---|---|---|---|---|---|
| * In the table, "-" indicates that the component is not included. | | | | | | | | | | | |

### [Evaluation]

As indicated in the tables above, the adhesive power in Examples 1 to 25 was high due to the inclusion of the components (A) to (D), and the ratio (Ac/SH) of the total molar number of (meth)acryloyl groups contained in the component (B) to the total molar number of thiol groups contained in the component (A) being from 0.25 to 0.80.

In contrast, the adhesive power in Comparative Examples 1 to 12 was low as a result of the ratio (Ac/SH) being outside the range defined in the present invention.

The disclosure of Japanese Patent Application No. 2014-078902 is incorporated herein by reference.

All publications, patent applications, and technical criteria mentioned in this specification are herein incorporated by reference to the same extent as if each individual publication, patent application, or technical standard was specifically and individually indicated to be incorporated by reference.

### INDUSTRIAL APPLICABILITY

The adhesive sheet according to the present invention can suitably be used in, particularly, application to adhesion to rubber, and in a layered body including a rubber layer and an adhesion layer. However, the applications of the adhesive sheet are not limited thereto, and the composition can also be used as a coating material to which colored particles or the like are incorporated, and which is used for imparting decoration or the like.

## Claims

1. A method of producing an adhesive sheet comprising an adhesive composition layer, the method comprising:
applying a composition comprising a polythiol compound (A), a (meth)acrylic compound (B), a radical generator (C), a Michael addition catalyst (D), and a surface conditioner (E) to a support to form a coating film; and
polymerizing through a Michael addition reaction, the polythiol compound (A) and the (meth)acrylic compound (B) in the coating film to make the coating film an adhesive composition layer,
wherein the polythiol compound (A) is selected from the group consisting of: a polythiol in which a portion other than the thiol groups is an aliphatic hydrocarbon; a polythiol obtainable by replacing halogen atoms of a halohydrin adduct of an alcohol with thiol groups; a polythiol that is a hydrogen sulfide reaction product of a polyepoxide compound; a thioglycolic acid ester obtainable by an ester-forming reaction between a polyhydric alcohol having from 2 to 6 hydroxyl groups in a molecule thereof and thioglycolic acid; a mercapto fatty acid ester obtainable by an ester-forming reaction between a polyhydric alcohol having from 2 to 6 hydroxyl groups in a molecule thereof and a mercapto fatty acid; a thiol isocyanurate compound obtainable by a reaction between an isocyanurate compound and a thiol; a thiol that includes a polysulfide group; a silicone modified with thiol groups; and silsesquioxane modified with thiol groups;
the (meth)acrylic compound (B) has a plurality of at least one of an acryloyl group or a methacryloyl group, and has a ring structure;
the radical generator (C) is a thermal radical generator consisting of a peroxide;
the Michael addition catalyst (D) is an amine-based catalyst;
the surface conditioner (E) is a silicone acrylate-based surface conditioner, and
a ratio (Ac/SH) of a total molar number (Ac) of the at least one of an acryloyl group or a methacryloyl group contained in the (meth)acrylic compound (B) to a total molar number (SH) of thiol groups contained in the polythiol compound (A) before polymerization is from 0.25 to 0.80, and
wherein a total content of components (A) to (D) is 80% by mass or more with respect to a total mass of the composition for an adhesive composition layer.

2. The method according to claim 1, wherein the polythiol compound (A) is a primary thiol.

3. The method according to claim 1 or claim 2, wherein the polythiol compound (A) has three or more thiol groups in one molecule thereof.

4. The method according to any one of claims 1 to 3, wherein the polythiol compound (A) has a molecular weight of from 200 to 3000.

5. The method according to any one of claims 1 to 4, wherein a number of the at least one of an acryloyl group or a methacryloyl group in one molecule of the (meth)acrylic compound (B) is three or more.

6. The method according to any one of claims 1 to 5, wherein the (meth)acrylic compound (B) includes a nitrogen atom.

7. The method according to any one of claims 1 to 5, wherein the (meth)acrylic compound (B) includes at least one of a urethane skeleton or an isocyanurate ring.

8. The method according to any one of claims 1 to 7, wherein the ratio (Ac/SH) of the total molar number (Ac) of the at least one of an acryloyl group or a methacryloyl group contained in the (meth)acrylic compound (B) to the total molar number (SH) of thiol groups contained in the polythiol compound (A) in the composition before polymerization is from 0.30 to 0.70.

9. A layered body comprising, in this order, a rubber layer, an adhesion layer formed using the method according to any one of claims 1 to 8, and another layer.

## Patentansprüche

1. Verfahren für die Herstellung einer Klebstoffplatte umfassend eine Klebstoffzusammensetzungsschicht, wobei das Verfahren Folgendes umfasst:
Aufbringen einer Zusammensetzung, die eine Polythiolverbindung (A), eine (Meth)acrylverbindung (B), einen Radikalerzeuger (C), einen Michael-Additionskatalysator (D) und einen Oberflächenkonditionierer (E) umfasst, auf einen Träger, um einen Beschichtungsfilm zu bilden; und
Polymerisieren, durch eine Michael-Additionsreaktionen, der Polythiolverbindung (A) und die (Meth)acrylverbindung (B) in dem Beschichtungsfilm, um den Beschichtungsfilm zu einer Klebstoffzusammensetzungsschicht zu machen,
wobei die Polythiolverbindung (A) aus der Gruppe ausgewählt wird bestehend aus: einem Polythiol, bei dem ein Teil, bei dem es sich nicht um die Thiolgruppen handelt, ein aliphatischer Kohlenwasserstoff ist; einem Polythiol, das durch Ersetzen von Halogenatomen eines Halohydrinaddukts eines Alkohols mit Thiolgruppen erhältlich ist; einem Polythiol, das ein Wasserstoffsulfidreaktionsprodukt einer Polyepoxidverbindung ist; einem Thioglycolsäureester, der durch eine esterbildende Reaktion zwischen einem mehrwertigen Alkohol, der 2 bis 6 Hydroxylgruppen in einem Molekül davon aufweist, und Thioglycolsäure erhältlich ist; einem Mercaptofettsäureester, der durch eine esterbildende Reaktion zwischen einem mehrwertigen Alkohol, der 2 bis 6 Hydroxylgruppen in einem Molekül davon aufweist, und einer Mercaptofettsäure erhältlich ist; einer Thiolisocyanuratverbindung, die durch eine Reaktion zwischen einer Isocyanuratverbindung und einem Thiol erhältlich ist; einem Thiol, das eine Polysulfidgruppe umfasst; einem mit Thiolgruppen modifizierten Silicon; und mit Thiolgruppen modifiziertem Silsequioxan;
die (Meth)acrylverbindung (B) eine Mehrzahl von mindestens einer von einer Acryloylgruppe oder einer Methacryloylgruppe aufweist und eine Ringstruktur aufweist;
der Radikalerzeuger (C) ein thermischer Radikalerzeuger ist, der aus einem Peroxid besteht;
der Michael-Additionskatalysator (D) ein Katalysator auf der Basis von Amin ist; der Oberflächenkonditionierer (E) ein Oberflächenkonditionierer auf der Basis von Siliconacrylat ist; und
ein Verhältnis (Ac/SH) der gesamten Molzahl (Ac) des mindestens einen von einer Acryloylgruppe oder einer Methacryloylgruppe, , die in der (Meth)acrylverbindung (B) enthalten ist, zu einer gesamten Molzahl (SH) von Thiolgruppen, die in der Polythiolverbindung A enthalten sind, vor der Polymerisation 0,25 bis 0,80 beträgt und
wobei ein Gesamtgehalt der Komponenten (A) bis (D) 80 Masse-% oder mehr mit Bezug auf eine Gesamtmasse der Zusammensetzung für eine Klebstoffzusammensetzungsschicht ist.

2. Verfahren nach Anspruch 1, wobei die Polythiolverbindung (A) ein primäres Thiol ist.

3. Verfahren nach Anspruch 1 oder Anspruch 2, wobei die Polythiolverbindung (A) drei oder mehr Thiolgruppen in einem Molekül davon aufweist.

4. Verfahren nach irgendeinem der Ansprüche 1 bis 3, wobei die Polythiolverbindung (A) ein Molekulargewicht von 200 bis 3000 aufweist.

5. Verfahren nach irgendeinem der Ansprüche 1 bis 4, wobei die Anzahl der mindestens einen von einer Acryloylgruppe oder einer Methacryloylgruppe in einem Molekül der (Meth)acrylverbindung drei oder mehr beträgt.

6. Verfahren nach irgendeinem der Ansprüche 1 bis 5, wobei die (Meth)acrylverbindung (B) ein Stickstoffatom umfasst.

7. Verfahren nach irgendeinem der Ansprüche 1 bis 5, wobei die (Meth)acrylverbindung (B) mindestens eines von einem Urethanskelett oder einem Isocyanuratring umfasst.

8. Verfahren nach irgendeinem der Ansprüche 1 bis 7, wobei das Verhältnis (Ac/SH) der gesamten Molzahl (Ac) der mindestens einen von einer Acryloylgruppe oder einer Methacryloylgruppe, die in der (Meth)acrylverbindung (B) enthalten ist, zu der gesamten Molzahl (SH) von Thiolgruppen, die in der Polythiolverbindung (A) enthalten sind, in der Zusammensetzung vor der Polymerisation 0,30 bis 0,70 beträgt.

9. Schichtförmiger Körper umfassend, in dieser Reihenfolge, eine Kautschukschicht, eine Klebstoffschicht, die unter Anwendung des Verfahrens nach irgendeinem der Ansprüche 1 bis 8 gebildet worden ist, und eine andere Schicht.

## Revendications

1. Procédé de production d'une feuille adhésive comprenant une couche de composition adhésive, le procédé comprenant:
l'application d'une composition comprenant un composé polythiol (A), un composé (méth)acrylique (B), un générateur de radicaux (C), un catalyseur d'addition de Michael (D), et un agent de conditionnement de surface (E) à un support pour former un film de revêtement; et
la polymérisation à travers une réaction d'addition de Michael, du composé polythiol (A) et du composé (méth)acrylique (B) dans le film de revêtement pour faire du film de revêtement une couche de composition adhésive,
le composé polythiol (A) étant sélectionné dans le groupe constitué de: un polythiol dans lequel une partie autre que les groupes thiol est un hydrocarbure aliphatique; un polythiol pouvant être obtenu en remplaçant les atomes d'halogène d'un produit d'adduction halohydrine d'un alcool avec des groupes thiol; un polythiol qui est un produit de réaction sulfure d'hydrogène d'un composé polyépoxyde; un ester d'acide thioglycolique pouvant être obtenu par une réaction de formation d'ester entre un poly(alcool hydrique) présentant de 2 à 6 groupes hydroxyle dans sa molécule et un acide thioglycolique; un ester d'acide mercapto gras pouvant être obtenu par une réaction de formation d'ester entre un poly(alcool hydrique) présentant de 2 à 6 groupes hydroxyle dans sa molécule et un acide mercapto gras; un composé thiol isocyanurate pouvant être obtenu par une réaction entre un composé isocyanurate et un thiol; un thiol qui comprend un groupe polysulfure; une silicone modifiée avec des groupes thiol; et un silsesquioxane modifié avec des groupes thiol;
le composé (méth)acrylique (B) présentant une pluralité d'au moins un groupe acryloyle ou d'un groupe méthacryloyle, et présentant une structure cyclique;
le générateur de radicaux (C) étant un générateur thermique de radicaux constitué d'un peroxyde;
le catalyseur d'addition de Michael (D) étant un catalyseur à base d'aminé;
l'agent de conditionnement de surface (E) étant un agent de conditionnement de surface à base d'acrylate de silicone, et un rapport (Ac/SH) d'un nombre molaire total (Ac) dudit au moins groupe acryloyle ou groupe méthacryloyle contenu dans le composé (méth)acrylique (B) à un nombre molaire total (SH) des groupes thiol contenus dans le composé polythiol (A) avant la polymérisation étant de 0,25 à 0,80, et
une teneur totale des constituants (A) à (D) étant de 80 % en masse ou plus par rapport à une masse totale de la composition pour une couche de composition adhésive.

2. Procédé selon la revendication 1, le composé polythiol (A) étant un thiol primaire.

3. Procédé selon la revendication 1 ou la revendication 2, le composé polythiol (A) présentant trois groupes thiol ou plus dans une molécule de celui-ci.

4. Procédé selon l'une quelconque des revendications 1 à 3, le composé polythiol (A) présentant un poids moléculaire de 200 à 3000.

5. Procédé selon l'une quelconque des revendications 1 à 4, un nombre dudit au moins groupe acryloyle ou groupe méthacryloyle dans une molécule du composé (méth)acrylique (B) étant de trois ou plus.

6. Procédé selon l'une quelconque des revendications 1 à 5, le composé (méth)acrylique (B) comprenant un atome d'azote.

7. Procédé selon l'une quelconque des revendications 1 à 5, le composé (méth)acrylique (B) comprenant au moins un squelette uréthane ou un cycle isocyanurate.

8. Procédé selon l'une quelconque des revendications 1 à 7, le rapport (Ac/SH) du nombre molaire total (Ac) dudit au moins groupe acryloyle ou groupe méthacryloyle contenu dans le composé (méth)acrylique (B) au nombre molaire total (SH) des groupes thiol contenus dans le composé polythiol (A) dans la composition avant la polymérisation étant de 0,30 à 0,70.

9. Corps stratifié comprenant, dans cet ordre, une couche de caoutchouc, une couche d'adhésion formée en utilisant le procédé selon l'une quelconque des revendications 1 à 8, et une autre couche.
